# FASCICULE DE BREVET EUROPEEN

(11) **EP 4 243 599 B1**
(45) Date de publication et mention de la délivrance du brevet: **04.03.2026**
(21) Numéro de dépôt: 21823192.6
(22) Date de dépôt: 16.11.2021
(51) Int. Cl.: A01G 17/16, A01C 5/06, E02D 7/06, E04H 17/26

(54) **DISPOSITIF MULTIFONCTIONS ATTELE, POUR L'IMPLANTATION AU DEFILE D'ACCESSOIRES POUR LA VIGNE, NOTAMMENT DES PIQUETS**
MEHRZWECK-KUPPLUNGSVORRICHTUNG FÜR DIE LAUFEINRICHTUNG VON WEINGÄRTENZUBEHÖR, INSBESONDERE REITERPFÄHLEN
COUPLED MULTI-PURPOSE DEVICE, FOR THE RUNNING INSTALLATION OF VINEYARD ACCESSORIES, IN PARTICULAR STAKES

(30) Priorité: 16.11.2020 FR 2011704; 16.11.2020 FR 2011705
(43) Date de publication de la demande: 20.09.2023
(73) Titulaire: Mandrafina, Georges, 2490-625 Ourem (PT)
(72) Inventeur: Mandrafina, Georges, 2490-625 Ourem (PT)
(74) Mandataire: Aquinov
(86) Numéro de dépôt international: PCT/EP2021/081778
(87) Numéro de publication internationale: WO 2022/101493

(56) Documents cités:
- FR-A1- 2 554 669
- GB-A- 2 447 785

## Description

L'invention concerne un dispositif, notamment multifonctions, attelé, pour l'implantation au défilé d'accessoires pour la vigne, notamment des piquets et/ou des marquants, de différentes dimensions et avec différentes profondeurs d'enfoncement, avec des moyens de correction de pente dans les différentes directions et de correction du point d'implantation dudit piquet et/ou marquant. L'invention vise également des moyens de correction de pente, d'ouverture d'un sillon, des moyens de dépose de fil de palissage, des moyens de fertilisation, de dépose de tuyau goutte à goutte. L'ensemble de ces opérations est réalisé en simultané.

On sait que l'implantation d'une vigne requiert différentes opérations chronophages. Sur une parcelle donnée et délimitée par des coordonnées accessibles aux dispositifs de positionnement par satellite, l'implantation est déterminée en fonction de nombreux paramètres comme l'ensoleillement, la variété de plants, le type de taille, le palissage, la largeur de l'inter rangs pour ne citer que ceux-là. Une fois les données fixées, celles-ci sont introduites dans un logiciel d'implantation destiné à piloter les différents moyens du dispositif selon la présente invention. Le même logiciel pilote également le déplacement des moyens de traction en vitesse et en direction du dispositif attelé selon la présente invention, totalement en automatique avec ou sans opérateur/chauffeur présent.

Les opérations à effectuer pour implanter une vigne consistent à tracer un sillon, à placer un plant et à enfoncer un marquant, immédiatement juxtaposé au plant. Ce marquant est destiné à tutorer ledit plant dans les premiers mois. L'implantation est effectuée suivant le schéma d'implantation du logiciel, c'est-à-dire avec un espacement donné, une profondeur donnée, suivant la nature du sol et la longueur du marquant, or il existe réellement différents besoins auxquels le dispositif selon la présente invention doit répondre pour être utilisable dans différents vignobles et dans différents terrains. Quels que soient la pente et le dévers, ce marquant doit impérativement être enfoncé verticalement pour que le plant de vigne se développe verticalement comme tous les végétaux et que le marquant puisse faire office de tuteur.

Le complément d'une implantation de la vigne sur la parcelle consiste à placer des piquets destinés à supporter les fils de palissage et à dérouler les fils de palissage eux-mêmes le long des piquets. De nouveau, en fonction de la nature du sol, du type de culture de la vigne, de la variété, de la hauteur de taille notamment, il est nécessaire d'utiliser des piquets de longueur donnée et de procéder à un enfoncement également adapté en fonction de cette longueur. Le schéma d'implantation est différent car les piquets sont plus hauts pour leur partie aérienne et plus espacés que les marquants puisqu'il est nécessaire de disposer d'un piquet tous les 3 ou 4 ceps de vigne pour donner un ordre d'idée donc tous les 3 ou 4 marquants. De nouveau, les piquets doivent être implantés verticalement, quelle que soit l'inclinaison du sol dans toutes les directions et avantageusement avec des sommets à la même hauteur par rapport au sol pour un palissage homogène de la vigne de la parcelle. En effet, ceci est particulièrement important pour les opérations futures d'entretien de la vigne, notamment lorsqu'elles sont mécanisées comme les actions de pré taillage, de vendange à la machine lorsque c'est le cas ou encore pour la prétaille des sarments avant la taille d'hiver de la vigne. Les piquets peuvent être métalliques, en bois ou encore en matériau composite, les marquants étant généralement eux aussi dans les mêmes matériaux que les piquets.

De même, une fois l'implantation des piquets effectuée, il est nécessaire de dérouler plusieurs fils de palissage destinés à être fixés sur lesdits piquets, pour certains de façon fixe et pour d'autres de façon amovible, pour pouvoir les mettre à terre lors des différentes interventions d'entretien de la vigne.

Le document FR 2 554 669A1, décrit un dispositif multifonctions selon le préambule de la revendication 1.

D'une part, avec le même dispositif multifonctions attelé, selon la présente invention, l'opérateur peut assurer l'implantation de ces accessoires simultanément à l'implantation des piquets et marquants. Mieux encore, il peut assurer des implantations sur des terroirs et avec des variétés différentes de cépages. Si l'opérateur est une société de services pour l'implantation de la vigne, un entrepreneur Viti / Vinicole, il est aisé, par les possibilités de réglage, de travailler différents terroirs, différentes variétés avec le même dispositif. La polyvalence est extrêmement attractive pour l'amortissement du matériel mais aussi pour les qualités ergonomiques de travail, car le dispositif selon l'invention limite les interventions humaines pénibles et évite les troubles musculosquelettiques.

Le but de la présente invention est aussi de pouvoir générer un sillon de plantation, assurer la mise en terre des plants de vigne, l'arrosage et le recouvrement du sillon de plantation généré.

D'autre part, l'implantation des piquets et/ou marquant, accompagnés de leurs plants, quelle que soit la configuration du terrain, avec un espacement régulier, une verticalité certaine et une hauteur définie, constante.

Un autre problème se pose lors de l'enfoncement des piquets et des marquants. Les marquants sont implantés dans le sillon voire à une dizaine de centimètres de profondeur supplémentaires. Les marquants rencontrent peu d'obstacle à l'enfoncement comme des pierres. Pour les piquets qui sont enfoncés de 60 à 80 cm de profondeur, ils rencontreraient régulièrement des pierres, surtout dans certaines natures de sol. Ces pierres s'opposeraient à leur enfoncement. Il faut donc s'assurer que les pierres ont été écartés dans l'alignement d'implantation des piquets et donc également des marquants, même en profondeur.

A ces fins, l'invention a pour objet un dispositif multifonctions, pour l'implantation au défilé d'accessoires pour la vigne, notamment des piquets/marquants comprenant un châssis monté sur roues et destiné à être attelé à des moyens de traction, suivant un sens de déplacement caractérisé en ce qu'il comporte des moyens d'enfoncement comprenant deux marteaux, un marteau supérieur et un marteau inférieur montés tous deux sur une coulisse montée en translation sur un mât de guidage, et des moyens de manœuvre en translation du marteau supérieur interposés entre ladite coulisse et ledit marteau supérieur.

Ces moyens de manœuvre en translation interposés entre la coulisse et le marteau supérieur comprennent un jeu de biellettes et un actionneur sous forme d'un vérin avec une partie fixe, en l'occurrence le corps du vérin solidaire de la coulisse et une partie mobile, en l'occurrence la tige du vérin, des biellettes d'action, agencées en paire, montées pivotantes par une de leurs extrémités de part et d'autre de la coulisse, dans des trous ménagés dans une platine solidaire de ladite coulisse, les autres extrémités des biellettes d'action étant montées pivotantes sur la coulisse par l'intermédiaire de biellettes de transfert, montées en paire, rapportées sur l'extrémité libre des biellettes d'action, les biellettes de transfert ayant chacune l'autre extrémité rapportée pivotante sur le marteau supérieur, de façon à générer un mouvement de translation du marteau supérieur par rapport la coulisse vers le haut ou vers le bas.

Les moyens d'enfoncement comprennent de façon particulière, un appendice de montage sur le châssis et des moyens de correction avec une platine montée pivotante autour d'un axe de pivotement par rapport au châssis, orienté transversalement par rapport au sens de déplacement et des moyens de manœuvre en pivotement, interposés entre ladite platine et ledit châssis de façon à pouvoir faire basculer la platine autour de l'axe de pivotement.

Selon une autre caractéristique, la platine porte un plateau, monté en translation par rapport à ladite platine, et des moyens de manœuvre dudit plateau en translation, suivant le sens de déplacement.

De façon complémentaire, le plateau porte un ascenseur avec une ossature comportant quatre montants et quatre traverses, et quatre manchons coulissants sur les quatre montants et un socle, solidaire desdits manchons coulissants avec des moyens de manœuvre dudit socle interposés entre ledit socle et les traverses de façon à pouvoir monter et descendre ledit socle par rapport à l'ossature.

De plus, le socle porte des moyens de compensation de l'avance comprenant une paire de bras montés pivotants par rapport au socle, chacun par une extrémité et montés pivotants par rapport à la coulisse des moyens d'enfoncement, chacun par l'autre extrémité ainsi que des moyens de manœuvre de compensation à l'avance interposés entre lesdits bras et ledit socle de façon à pouvoir faire pivoter lesdits bras.

Avantageusement, le socle comporte un berceau d'accueil à coulissement de l'appendice de montage des moyens d'enfoncement à deux marteaux.

Avantageusement, le châssis comporte deux bras, l'un gauche, l'autre droit, portant chacun une roue et un vérin gauche et un vérin droit interposé entre ledit châssis et chacun des bras correspondants, de façon à permettre de corriger le dévers.

De préférence, le dispositif comprend des moyens de travail de la terre.

Dans un exemple de réalisation de l'invention, le dispositif comprend un soc, mobile en hauteur de façon à pouvoir ouvrir un sillon et à implanter un pied de vigne en fond de sillon et des rasettes, mobiles en hauteur, pour fermer le sillon.

Avantageusement, le dispositif comprend des moyens d'ouverture d'un sillon profond, qui comprennent un vérin, orienté perpendiculairement au châssis et vers le bas, ce vérin comportant un corps et une tige mobile, le corps étant solidaire du châssis de façon à écarter les pierres et autres obstacles éventuels de la ligne d'implantation des piquets.

Plus particulièrement les moyens d'enfoncement sont montés sur une coulisse, elle-même montée en translation sur un mât de guidage, ledit mât comprenant un appendice de montage sur le châssis, ledit appendice de montage étant solidaire des moyens de correction de la pente dans le sens de déplacement ces moyens de correction de la pente comprenant une platine montée pivotante autour d'un axe de pivotement par rapport au châssis, orienté transversalement par rapport au sens de déplacement et des moyens de manœuvre en pivotement, interposés entre ladite platine et ledit châssis de façon à pouvoir faire basculer la platine autour de l'axe de pivotement et corriger la pente dans le sens du déplacement.

Selon une autre caractéristique, la platine porte un plateau, monté en translation par rapport à ladite platine, et des moyens de manœuvre dudit plateau en translation, suivant le sens de déplacement de façon à corriger le point d'implantation.

De façon particulière, le plateau porte un ascenseur avec une ossature comportant quatre montants, quatre traverses, et quatre manchons coulissants sur les quatre montants ainsi qu'un socle, solidaire desdits manchons coulissants avec des moyens de manœuvre dudit socle, interposés entre ledit socle et les traverses, de façon à pouvoir monter et descendre ledit socle par rapport à ladite ossature et audit plateau.

Le socle porte également des moyens de compensation de l'avance comprenant une paire de bras montés pivotants par rapport au socle, chacun par une extrémité et montés pivotants par rapport à la coulisse des moyens d'enfoncement, chacun par l'autre extrémité ainsi que des moyens de manœuvre de compensation à l'avance interposés entre lesdits bras et ledit socle de façon à pouvoir faire pivoter lesdits bras.

Avantageusement, le socle comporte un berceau d'accueil à coulissement de l'appendice de montage des moyens d'enfoncement.

Selon l'invention, les moyens d'enfoncement comprennent deux marteaux, un marteau supérieur et un marteau inférieur montés tous deux sur une coulisse montée en translation sur un mât de guidage, et des moyens de manœuvre en translation du marteau supérieur interposés entre ladite coulisse et ledit marteau supérieur.

Avantageusement, les moyens de manœuvre en translation interposés entre la coulisse et le marteau supérieur comprennent un jeu de biellettes et un actionneur sous forme d'un vérin avec une partie fixe, en l'occurrence le corps du vérin solidaire de la coulisse et une partie mobile, en l'occurrence la tige du vérin, des biellettes d'action, agencées en paire, montées pivotantes par une de leurs extrémités de part et d'autre de la coulisse, dans des trous ménagés dans une platine solidaire de ladite coulisse, les autres extrémités des biellettes d'action étant montées pivotantes sur la coulisse par l'intermédiaire de biellettes de transfert, montées en paire, rapportées sur l'extrémité libre des biellettes d'action, les biellettes de transfert ayant chacune l'autre extrémité rapportée pivotante sur le marteau supérieur, de façon à générer un mouvement de translation du marteau supérieur par rapport la coulisse vers le haut ou vers le bas.

Avantageusement, le dispositif comprend des moyens de travail de la terre.

Dans un mode de réalisation de l'invention, le dispositif comprend un soc, mobile en hauteur de façon à pouvoir ouvrir un sillon et à implanter un pied de vigne en fond de sillon et des rasettes, mobiles en hauteur, pour fermer le sillon.

Avantageusement, le dispositif comprend des moyens d'ouverture d'un sillon profond, qui comprennent un vérin, orienté perpendiculairement au châssis et vers le bas, ce vérin comportant un corps et une tige mobile, le corps étant solidaire du châssis de façon à écarter les pierres et autres obstacles éventuels de la ligne d'implantation des piquets

La présente invention est maintenant décrite à l'aide d'un mode de réalisation particulièrement élaboré, à titre uniquement illustratif et nullement limitatif de la portée de l'invention. Cette description est effectuée à partir des dessins annexés, dessins sur lesquels les différentes figures représentent :
[Fig. 1] une vue en perspective arrière du dispositif multifonctions selon la présente invention.
[Fig. 2] une vue en coupe longitudinale avec un surlignage en trait épais du deux marteaux.
[Fig. 3A] une vue isolée en élévation latérale du deux marteaux selon la présente invention.
[Fig. 3B] une vue isolée en perspective arrière du deux marteaux de la figure 3A.
[Fig. 3C] une vue isolée en perspective avant de la partie haute de manœuvre du deux marteaux des figures 3A et 3B.
[Fig. 4A] une première position de départ de la partie haute des moyens de manœuvre du deux marteaux.
[Fig. 4B] une deuxième position avec un déplacement intermédiaire de la partie haute des moyens de manœuvre du deux marteaux.
[Fig. 4C] une troisième position avec un déplacement de la partie haute des moyens de manœuvre du deux marteaux avec un enfoncement plus avancé.
[Fig. 5] une vue en coupe longitudinale comme celle de la figure 2, avec un surlignage entrait épais des moyens de correction d'inclinaison.
[Fig. 6] une vue en coupe longitudinale comme celle de la figure 2, avec un surlignage en trait épais des moyens de manœuvre du deux marteaux.
[Fig. 7A] une vue en coupe longitudinale comme celle de la figure 2, d'une étape du fonctionnement du deux marteaux au défilé, en début d'enfoncement.
[Fig. 7B] une vue semblable à celle de la figure 7A, d'une étape du fonctionnement du deux marteaux au défilé, mais en étape intermédiaire d'enfoncement.
[Fig. 7C] une vue identique à celle de la figure 7A, d'une étape du fonctionnement du deux marteaux au défilé, mais en étape finale d'enfoncement.
[Fig. 8A] une vue des moyens de réglage de compensation en position de compensation d'une pente positive.
[Fig. 8B] une vue des moyens de réglage de compensation d'une pente négative.
[Fig. 9] une vue des moyens de production d'un sillon.

Le dispositif multifonctions attelé, pour l'implantation au défilé d'accessoires pour la vigne, notamment des piquets et/ou des marquants, suivant une direction de différentes dimensions et avec différentes profondeurs d'enfoncement est maintenant décrit en regard des différentes figures.

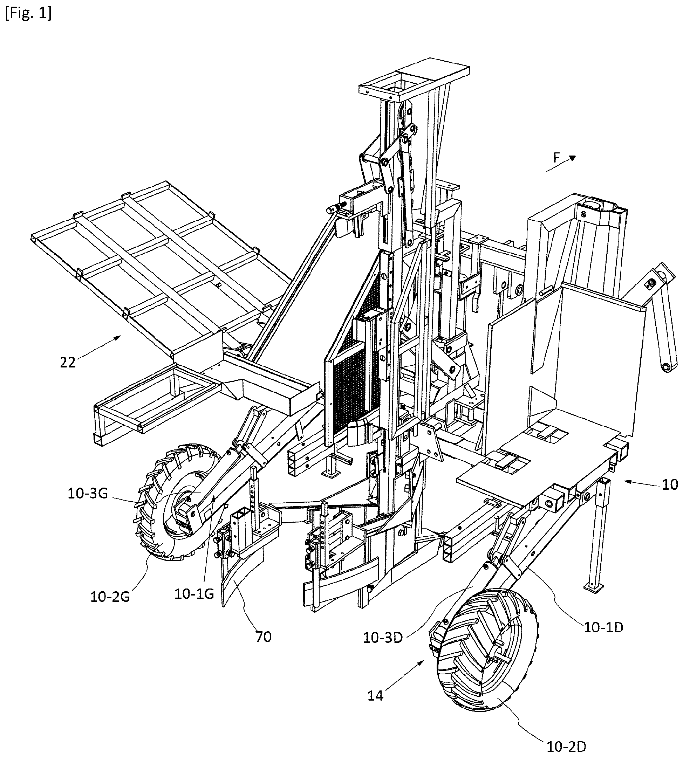

Sur la figure 1, le dispositif selon l'invention comprend, montés sur un châssis 10 :
- des moyens d'enfoncement 12 de piquets et/ou marquants,
- des moyens de correction de dévers 14, transversalement à la direction de déplacement F,
- des moyens de compensation à l'avance 16, par rapport à la vitesse de déplacement du dispositif,
- des moyens de compensation de la pente 18 durant l'enfoncement, selon la direction de déplacement,
- des moyens de travail de la terre et
- des organes 22 complémentaires pour l'implantation au défilé d'accessoires pour la vigne.

Sur la figure 1, on a représenté le châssis 10 muni de moyens de correction de dévers 14 comprenant deux bras de roulage,10-1, l'un gauche 10-1G, l'autre droit 10-1D, la droite et la gauche étant établie en regard de la flèche F qui indique le sens d'avancement. Des roues 10-2, une roue gauche 10-2G et une roue droite 10-2D, sont rapportées respectivement sur chacun desdits bras de roulage. Des organes de correction de dévers 10-3, en l'occurrence un vérin gauche 10-3G et un vérin droit 10-3D sont interposés entre ledit châssis 10 et chacun desdits bras de roulage correspondants, permettant de corriger le dévers perpendiculairement à la direction de déplacement F. Ces vérins sont avantageusement de type hydraulique. La puissance hydraulique provient d'un moyen de traction, non représenté, tel qu'un tracteur auquel ledit châssis 10 est attelé, ceci de façon connue.

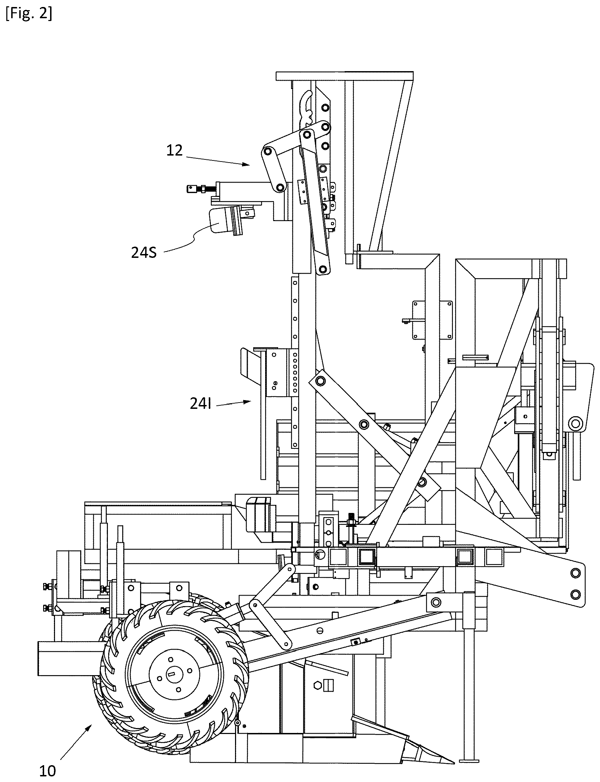

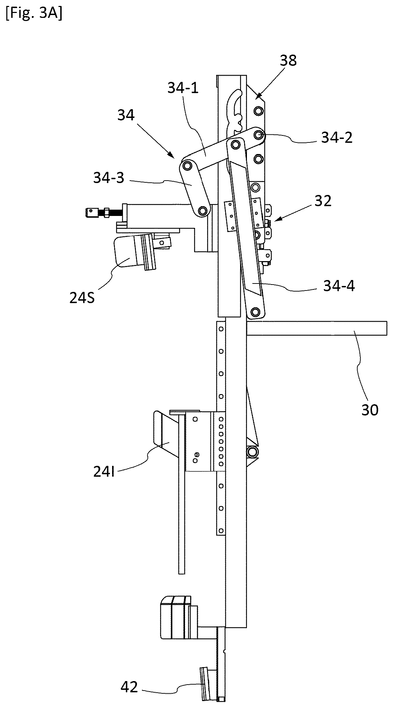

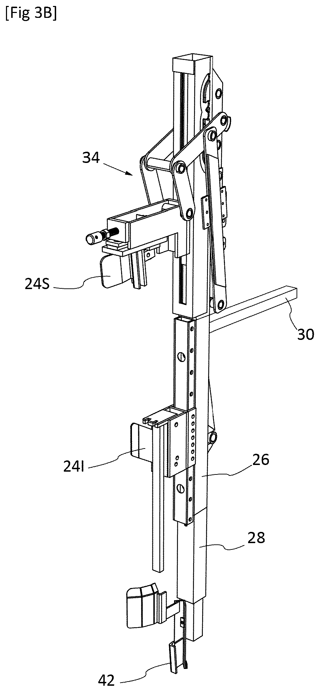

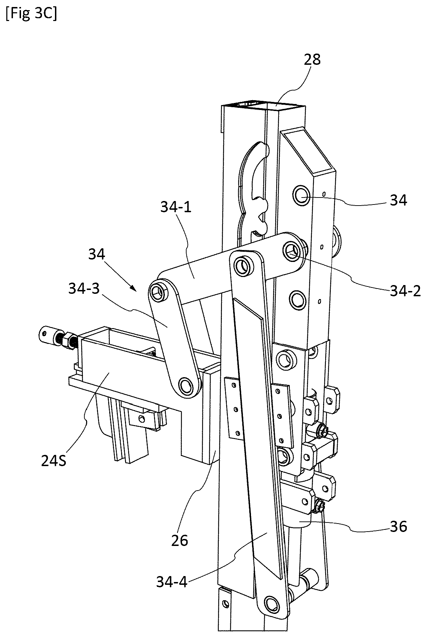

Les moyens d'enfoncement 12 de piquets et/ou marquants sont représentés sur les figures 2, 3 et 4 indifféremment. Ces moyens d'enfoncement 12 comprennent deux marteaux, un marteau supérieur 24S pour les piquets et un marteau inférieur 24I pour les marquants, montés tous deux sur une coulisse 26 et guidés par lesdites coulisses. Cette coulisse 26 est elle-même montée en translation sur un mât de guidage 28, voir figure 3B. Ce mât de guidage 28 comporte également un appendice de montage 30, de section carrée, anti-rotation. Des moyens de manœuvre en translation 32 du marteau supérieur 24S sont interposés entre la coulisse 26 et ledit marteau supérieur 24S de manière à assurer le déplacement en translation dudit marteau supérieur 24S sur ladite coulisse 26.

Les moyens de manœuvre en translation 32 du marteau supérieur 24S, interposés entre la coulisse 26 et le marteau supérieur, comprennent un jeu de biellettes 34 et un actionneur sous forme d'un actionneur 36, en l'occurrence un vérin avec une partie fixe, en l'occurrence le corps du vérin solidaire de la coulisse 26 et une partie mobile, en l'occurrence la tige du vérin solidaire de biellettes du jeu de biellettes 34. Des biellettes d'action 34-1, agencées en paire, sont montées pivotantes par une de leurs extrémités de part et d'autre de la coulisse 26, dans des trous 34-2 ménagés dans une platine 38 solidaire de ladite coulisse 26. Cette platine 38 comprend plusieurs trous à différentes hauteurs en vue de permettre des réglages complémentaires de courses. Les autres extrémités des biellettes d'action 34-1 sont montées pivotantes sur la coulisse 26 par l'intermédiaire de biellettes de transfert 34-3, agencées en paire, rapportées sur l'extrémité libre des biellettes d'action 34-1. Les biellettes de transfert 34-3 ont chacune l'autre extrémité rapportée pivotante sur le marteau supérieur 24S. Ainsi, le jeu de deux biellettes d'action et de deux biellettes de transfert permet de générer un mouvement de translation du marteau supérieur 24S par rapport la coulisse 26 vers le haut ou vers le bas, à course démultipliée, par le simple mouvement de rotation du jeu de biellettes 34.

L'actionneur 36 du jeu de biellettes est interposé entre la coulisse 26 et des biellettes de poussée 34-4, montées en paire. Ces biellettes de poussée 34-4 ont une extrémité montée pivotante sur la partie mobile de l'actionneur 36 et l'autre extrémité est montée pivotante par rapport aux biellettes d'action 34-1, en un point situé entre les deux extrémités desdites biellettes, de façon à pouvoir les faire pivoter par rapport à l'axe des trous 34-2.

La coulisse 26 porte en plus du marteau supérieur 24S, le marteau 24I disposé en partie inférieure et rapporté de façon fixe sur un rail fixe 40, disposant d'un jeu de trous de fixation pour permettre un réglage de la hauteur initiale dudit marteau inférieur 24I par rapport à la coulisse 26. Un guidage fixe inférieur 42 est prévu en pied du mât de guidage 28.

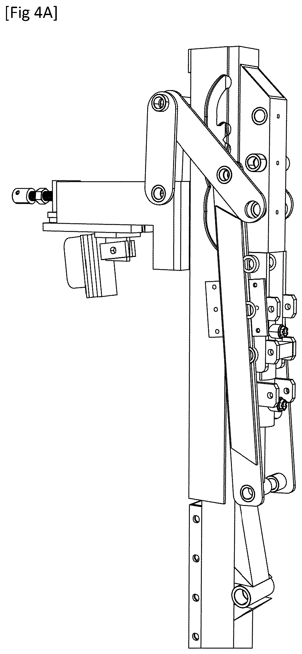

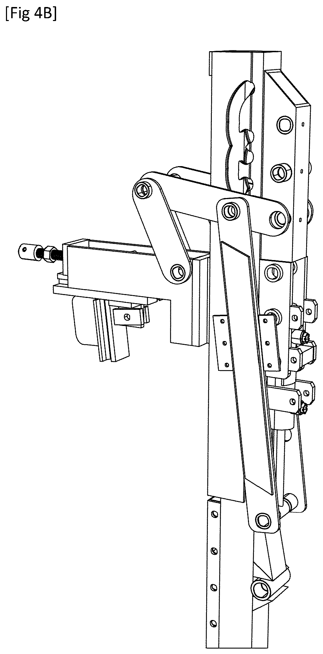

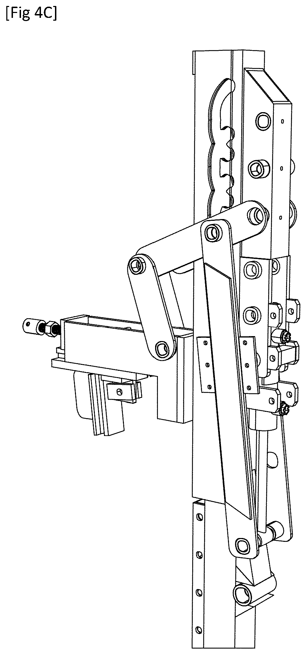

Sur les figures 4A, 4B et 4C, on a représenté un synoptique de fonctionnement des moyens de manœuvre du marteau supérieur 24S par rapport à la coulisse 26. On entend par marteau, non pas une tête de frappe, mais une tête d'enfoncement en force par appui grâce aux actionneurs hydrauliques mais le terme marteau est d'usage dans le domaine viti/vinicole du fait que les piquets étaient enfoncés manuellement au marteau par frappes dans des temps antérieurs. Sur la figure 4A, l'actionneur 36 est en position fermée, en l'occurrence, la tige du vérin est rétractée. De fait, les biellettes de poussée 34-4 sont pivotées vers le haut, les biellettes d'action 34-1 sont pivotées vers le haut et les biellettes de transfert 34-3 sont remontées si bien que le marteau supérieur 24S est en position haute. Sur la figure 4B, l'actionneur 36 est en position intermédiaire, les biellettes de poussée 34-4 sont pivotées vers le bas, les biellettes d'action 34-1 sont pivotées vers le bas autour de l'axe des trous 34-2 et les biellettes de transfert 34-3 sont déplacées vers le bas, entrainant le marteau supérieur vers une position intermédiaire, sur la coulisse, indépendamment des mouvements de la coulisse qui seront décrits ultérieurement. Sur la figure 4C, les mouvements sont poursuivis, le marteau supérieur se déplace vers sa position basse maximale. Le marteau supérieur s'est donc rapproché du marteau inférieur qui est monté fixe par rapport à la coulisse 26. Suivant la limite de la position basse recherchée pour le marteau supérieur 24S, la position des biellettes d'action 34-1 est modifiée dans les trous 34-2. De même, la position du marteau inférieur 24I peut être ajustée sur la coulisse 26 grâce au rail qui le porte et qui est muni de trous de réglage. Les deux marteaux sont liés à la coulisse 26 mais ils peuvent être réglés de façon très précise, indépendamment, en fonction des besoins.

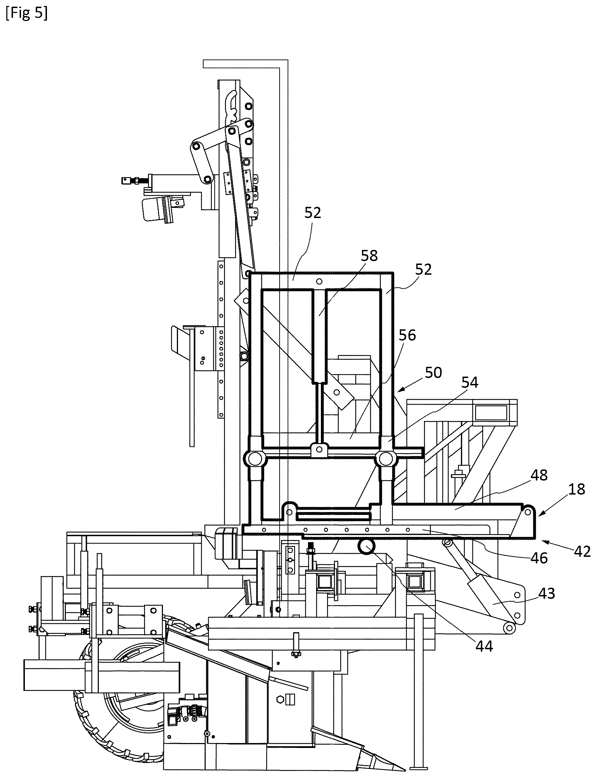

Les moyens d'enfoncement 12, et plus particulièrement le mât de guidage 28, sont rapportés par l'appendice de montage 30 sur le châssis 10 et plus particulièrement sur les moyens de correction 14 de dévers dans le sens de déplacement F et du point d'implantation. Ces moyens de correction 14 sont rapportés sur le châssis 10 et sont figurés en trait en surépaisseur sur la figure 5. Ces moyens de correction 14 comprennent une platine 42 montée pivotante autour d'un axe de pivotement 44 par rapport au châssis 10. Cet axe de pivotement 44 est orienté transversalement par rapport au sens de déplacement F. Des moyens de manœuvre en pivotement 43 sont interposés entre la platine 42 et le châssis 10 de façon à pouvoir faire basculer la platine 42 autour de l'axe de pivotement 44. Cette platine 42 porte elle-même un plateau 46, monté en translation par rapport à ladite platine 42, et des moyens de manœuvre 48 dudit plateau 46 en translation suivant la direction F, en l'occurrence sous forme d'un vérin hydraulique interposé entre la platine 42 et le plateau 46. Le mouvement de translation est orienté suivant la direction de déplacement F, dans les deux sens pour une compensation du point d'implantation.

Le plateau 46 porte un ascenseur 50, en l'occurrence avec une ossature comportant quatre montants 52, quatre traverses 52 et quatre manchons 54 coulissants sur les quatre montants 52. Tout autre solution telle qu'un vérin à section carrée, anti-rotation, pourrait aussi convenir. Ces manchons 54 coulissants supportent un socle 56 portant les moyens de compensation de l'avance 16, ledit socle 56 étant solidaire desdits manchons 54 coulissants. Des moyens de manœuvre 58 dudit socle 56, en l'occurrence une paire de vérins pour la symétrie du montage, sont interposés entre le socle 56 et les traverses 52 de façon à pouvoir monter et descendre ledit socle 56 par rapport à l'ossature, ce qui constitue l'ascenseur 50.

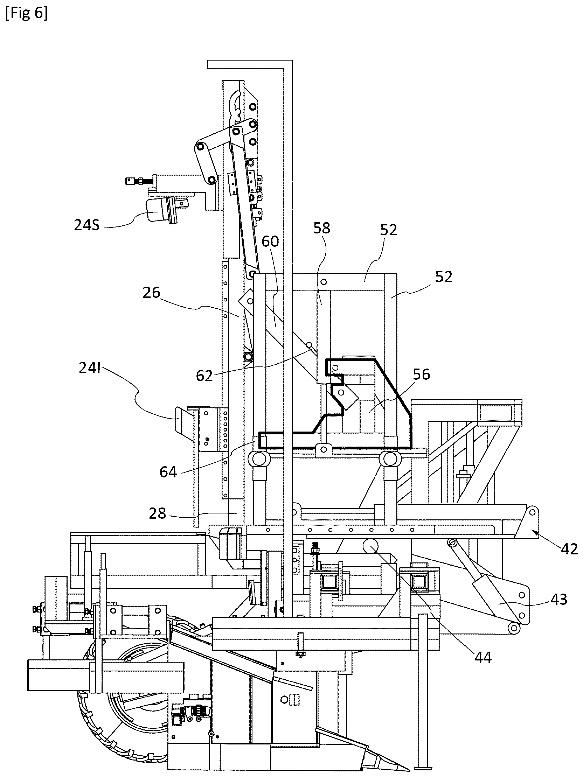

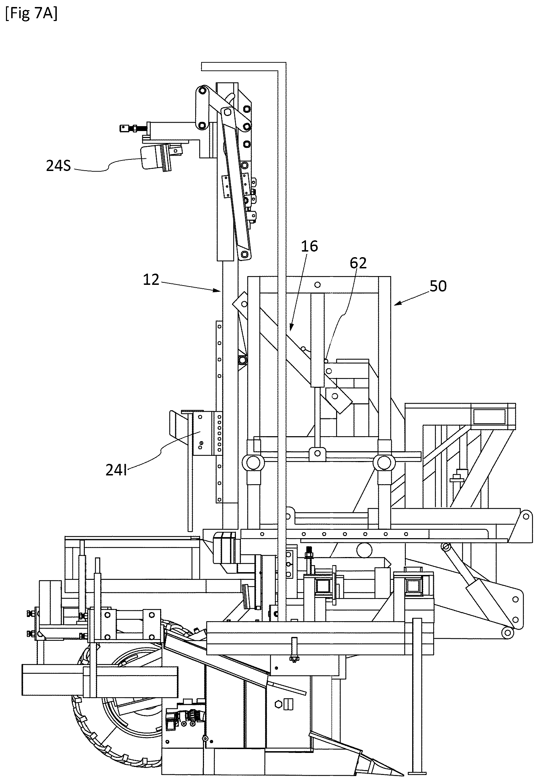

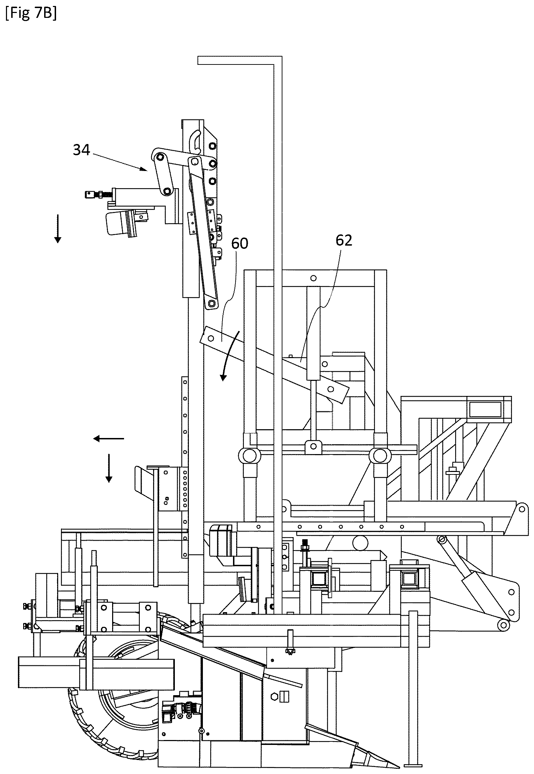

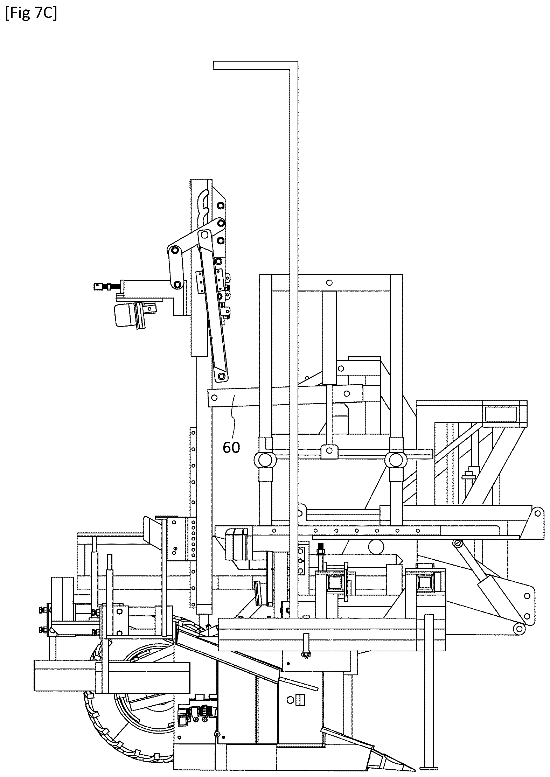

Les moyens de compensation de l'avance 16 sont détaillés sur la figure 6, représentés en trait en surépaisseur. Les moyens de compensation de l'avance 16 comprennent une paire de bras 60 montés pivotants par rapport au socle 56 chacun par une extrémité et montés pivotants par rapport à la coulisse 26, chacun par l'autre extrémité. Des moyens de manœuvre 62 de compensation à l'avance sont interposés entre lesdits bras 60 et le socle 56 de façon à pouvoir faire pivoter lesdits bras. De tels moyens de manœuvre 62 de compensation à l'avance, sont sous la forme d'un vérin hydraulique comme les autres moyens de manœuvre. Le socle 56 comporte un berceau 64 d'accueil, à coulissement, de l'appendice de montage 30 des moyens d'enfoncement 12 à deux marteaux. Cet appendice de montage 30 est donc monté à coulissement entre une position avancée en début d'enfoncement des marquants/piquets, et une position reculée en fin d'enfoncement, par rapport au sens d'avancement matérialisé par la flèche F. Un tel synoptique est représenté sur les figures 7. Ainsi sur la figure 7A, les moyens de manœuvre 62 de compensation à l'avance sont en position fermée, c'est-à-dire que la tige du piston du vérin hydraulique, en l'occurrence, est dans le corps du vérin, les bras 60 sont pivotés vers le haut. La coulisse 26 avec les deux marteaux est en position haute sur le mât de guidage 28, l'appendice de montage 30 est enfoncé vers l'avant dans le berceau 64. Sur la figure 7B, les bras 60 pivotent vers le bas car les moyens de manœuvre 62 de compensation à l'avance sont en position intermédiaire. L'appendice de montage 30 se translate dans le berceau 64, vers l'arrière c'est-à-dire dans le sens opposé de celui de la flèche F. Les moyens d'enfoncement 12 se déplacent vers l'arrière. La vitesse de déplacement vers l'arrière est égale à la vitesse de déplacement du véhicule tracteur et donc du châssis 10, par rapport au sol et dans le sens F. Il y a alors compensation et l'enfoncement par les marteaux 24 est réalisé à vitesse de déplacement nulle par rapport au sol. La durée d'enfoncement et par conséquent, de translation de la coulisse 26 sur le mât de guidage 28 est inférieure à la durée du déplacement vers l'arrière des moyens d'enfoncement 12. Sur la figure 7C, l'enfoncement est bien avancé et les moyens d'enfoncement sont encore reculés à proximité de la position maximale suivant les durées d'enfoncement nécessaires. Pour le retour, les manœuvres inverses ramènent les différents éléments mobiles en position initiale avec l'avantage de pouvoir augmenter les vitesses de retour puisqu'il n'y a plus de lien entre vitesse de déplacement et vitesse d'enfoncement.

Durant ce déplacement vers l'arrière, généré par le pivotement des bras 60, les moyens d'enfoncement 12 sont déplacés vers l'arrière par une compensation de la vitesse d'avance mais le mouvement des bras 60, solidaires de la coulisse 26, provoque également l'enfoncement par un mouvement d'abaissement du mât 28 portant les marteaux 24 et donc le déplacement des marteaux supérieur 24S et inférieur 24I vers le bas. Si c'est le marteau supérieur 24S qui est concerné car l'opération est l'enfoncement d'un piquet par exemple, ledit marteau supérieur 24S peut être déplacé d'une course supplémentaire grâce aux moyens de manœuvre en translation 32 avec son jeu associé de biellettes 34, interposés entre la coulisse 26 et le marteau supérieur 24S.

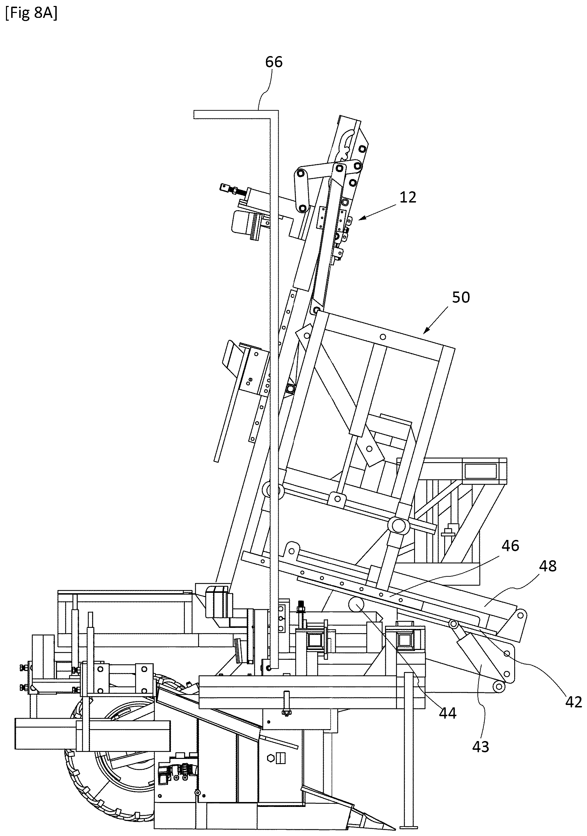

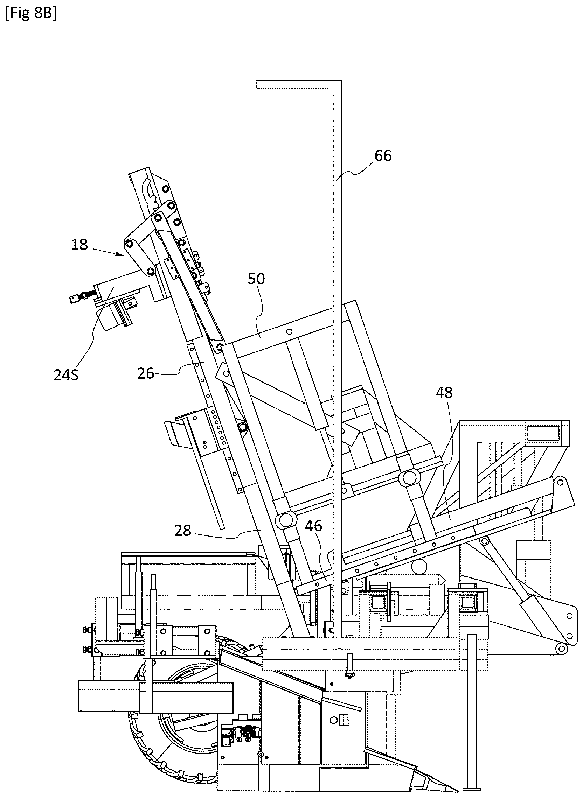

Les moyens de compensation de la pente 18 durant l'enfoncement sont maintenant décrits en regard des figures 8A et 8B. Ces moyens de compensation de la pente 18 consistent à incliner les moyens d'enfoncement 12 pour compenser une pente, montée ou descente, en utilisant aussi simultanément les moyens de correction de dévers 14 si nécessaire pour corriger ledit dévers. C'est le socle 56 qui assure la correction d'inclinaison en montée ou descente. Ce socle 56 est porté par l'ascenseur 50 qui est lui-même supporté par la platine 42. Pour compenser la pente, la platine 42, avec ce qu'elle supporte, pivote autour de l'axe de pivotement 44, sous l'action des moyens de manœuvre en pivotement 43 interposés entre la platine 42 et le châssis 10. Dans le cas présent figure 8A, la pente étant montante, la platine 42 est pivotée vers l'avant en fermant les moyens de manœuvre en pivotement 43, en l'occurrence un vérin hydraulique. Ainsi, les moyens d'enfoncement 12, la coulisse 26 et le mât de guidage 28, restent verticaux lorsque le châssis 10 s'incline en montée.

Il subsiste deux problèmes induits par cette inclinaison. Le piquet étant incliné par rapport au châssis, il faut translater l'ensemble des moyens d'enfoncement 12 suivant un angle par rapport au châssis qui est la référence car autrement le point de pénétration dans le sol serait reculé et d'autre part la hauteur d'enfoncement serait modifiée puisque la pointe inférieure du piquet se retrouve plus haute par rapport au sol puisqu'il y a un angle d'inclinaison. Il faut donc rapprocher du sol les moyens d'enfoncement 12 d'une part pour implanter dans le sol au point précis d'implantation prévu et pour abaisser les moyens d'enfoncement 12 d'autre part, afin de venir au contact du sol. Ces actions sont réalisées par mise en œuvre des moyens de correction 18.

L'ascenseur 50 modifie la hauteur des moyens d'enfoncement 12 en agissant sur les moyens de manœuvre 58 dudit socle 56. Sur la figure 8A, la pente est montante et les moyens d'enfoncement 12 doivent être pivotés vers l'avant pour que le piquet soit vertical. Dès lors, les moyens de correction 18 sont utilisés.

La platine 42 est pivotée par action des moyens de manœuvre 43, en l'occurrence un vérin qui est refermé c'est-à-dire que la tige du vérin rentre dans le corps du vérin. La platine 42 pivotant, entraîne en inclinaison le plateau 46 qui porte l'ascenseur 50 et les moyens d'enfoncement 12 à deux marteaux. Le plateau 46 étant monté mobile en translation par rapport à la platine 42, est déplacé par les moyens de manœuvre 48 dudit plateau pour déplacer les moyens d'enfoncement 12 vers l'avant, donc le piquet et/ou le marquant, ce qui compense l'inclinaison du châssis liée à la pente. Afin de compenser le décalage en hauteur par rapport au sol et inhérent à l'inclinaison par rapport au châssis, l'ascenseur 50 est utilisé pour déplacer le mât de guidage 28 portant la coulisse 26, dans le cas présent vers le bas. Tous les paramètres modifiés par la pente sont corrigés et le piquet est ainsi implanté au point donné, à la profondeur donnée, verticalement, au défilé. La manœuvre d'enfoncement n'est en aucun cas modifiée.

Dans le cas où le châssis est en pente descendante, voir figure 8B, les manœuvres sont exactement les mêmes, inversées.

On note que le dévers éventuel est corrigé par les vérins 10-3G et 10-3D qui compensent en agissant sur les bras 10-1G et 10-1D portant les roues 10-2G et 10-2D, qui font office de roues de jauge. Le châssis 10 est donc toujours horizontal, par rapport à l'axe transversal, c'est-à-dire perpendiculaire au sens de la flèche F. une correction de la hauteur d'implantation est aussi apportée puisque le piquet se trouve plus haut que sur un terrain plat. L'implantation du piquet est donc corrigée en verticalité par rapport à la pente suivant l'axe de déplacement F mais aussi perpendiculairement à cette direction de déplacement F.

L'ensemble des manœuvres des vérins est centralisé par un logiciel qui, à partir de capteurs de déplacement de chacun des moyens de déplacement, en l'occurrence des vérins, des capteurs de positions, des valeurs de vitesse de déplacement et des indications GPS, automatise les commandes de chacun des actionneurs, laissant l'opérateur des moyens de traction tel qu'un tracteur, libre pour une surveillance accrue. Le pilotage automatique des moyens de traction est également disponible, comme sur beaucoup de véhicules agricoles. A cet effet, une antenne GPS peut être montée sur le mât support 66, érigé à cet effet et solidaire de façon isostatique du châssis afin de disposer d'une valeur précise. Compte tenu des données introduites dans le logiciel concernant l'implantation, le logiciel indique par exemple sur une rampe de LED (diodes électroluminescentes) par des couleurs vertes lorsque l'implantation concerne un piquet ou par des couleurs rouges lorsque l'implantation concerne une marquant.

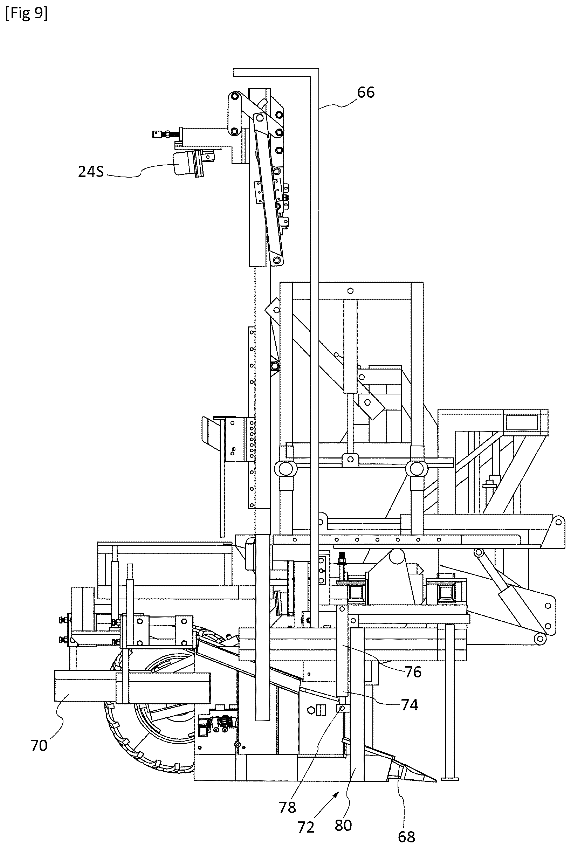

Le dispositif multifonctions attelé, pour l'implantation au défilé d'accessoires pour la vigne, permet en plus de l'implantation des piquets et marquants en une seule passe, au défilé, par les moyens de travail de la terre d'ouvrir un sillon d'implantation des plants de vigne, de les arroser, d'ouvrir un sillon profond pour l'implantation des piquets et de refermer le sillon. A cet effet, sur la figure 9, ces moyens de travail de la terre comprennent un soc 68, mobile en hauteur de façon à pouvoir ouvrir un sillon de 20 à 30 centimètres de profondeur. Ce sillon permet d'implanter un pied de vigne en fond de sillon et d'arroser moyennant un réservoir d'eau, une vanne et un tube de distribution, disposés en partie inférieure et non détaillés car connus de façon générale par l'homme de l'art. Avantageusement, le tube de distribution est positionné derrière le point d'implantation du plant de façon à pouvoir distribuer une dose d'eau dans le sillon, sensiblement au droit du plant avant la fermeture du sillon à l'aide de rasettes 70, mobiles en hauteur, disposées à l'arrière et visibles sur la figure 1, notamment. Selon la présente invention, il peut aussi être prévu des moyens 72 d'ouverture d'un sillon profond, qui comprennent un vérin 74, orienté perpendiculairement au châssis 10 et vers le bas. Ce vérin 74 comporte un corps 76 et une tige mobile 78, le corps étant solidaire du châssis 10. La tige mobile 78 porte un soc étroit 80 et peut prendre une position en saillie maximale, au moins égale à la profondeur complémentaire de celle du sillon pour l'enfoncement d'un piquet. Le soc étroit 80 permet de prolonger la profondeur du sillon de 20 à 30 centimètres jusqu'à 60 à 70 centimètres pour donner un ordre d'idée. Ce soc étroit 80 a pour but d'écarter les pierres et autres obstacles éventuels de la ligne d'implantation des piquets, garantissant l'enfoncement de tous les piquets.

De plus, il est possible d'adjoindre latéralement au dispositif multifonctions selon la présente invention, des dérouleurs de fils de palissage et/ou de tuyaux de goutte à goutte, un épandeur d'amendements pour une reprise parfaite du pied vigne implanté, une dose d'amendement étant distribuée en parallèle de l'arrosage.

Le dispositif comporte de façon connue des racks à piquets et marquants.

Le fonctionnement du dispositif multifonctions selon la présente invention est maintenant décrit en regard de l'ensemble des figures indifféremment. Le dispositif est servi par un opérateur de conduite, si nécessaire, ainsi que par au moins deux servants le premier servant pour alimenter en marquants et piquets et le deuxième servant pour assurer la mise en place des plants. Le dispositif multifonctions avance, tracté par les moyens de traction, conduit par l'opérateur conducteur, si nécessaire, éventuellement sous GPS. Les marteaux supérieur 24S et inférieur 24I sont réglés pour assurer une implantation de marquants d'une hauteur donnée et devant être implantés à une profondeur également déterminée. Le logiciel est configuré pour des espacements donnés, un nombre de marquants défini entre deux piquets, une profondeur du sillon, une profondeur du soc étroit, une dose d'eau donnée, une quantité d'amendement etc. Les corrections liées à la pente sont calculées en permanence par le logiciel, en fonction des données des capteurs. De la même façon le réglage en horizontalité transversale à l'aide des roues de jauge sont des paramètres fixes en mémoire permanente et non paramétrables par les opérateurs et servants. Seuls les paramètres liés à la parcelle concernée sont modifiables.

Le déroulement des fils de palissage et/ou de tuyau de goutte à goutte s'effectue parallèlement. Le dispositif selon la présente invention est multifonctions et surtout permet avec un même dispositif d'enfoncement d'implanter en un seul et même passage des piquets et des marquants et les plants, en plus des autres actions éventuelles.

## Revendications

1. Dispositif multifonctions, pour l'implantation au défilé d'accessoires pour la vigne, notamment des piquets/marquants comprenant un châssis (10) monté sur roues (10-2G, 10-2D) et destiné à être attelé à des moyens de traction, suivant un sens de déplacement F, **caractérisé en ce qu'**il comporte des moyens d'enfoncement (12) comprenant deux marteaux, un marteau supérieur (24S) et un marteau inférieur (24I) montés tous deux sur une coulisse (26) montée en translation sur un mât de guidage (28), et des moyens de manoeuvre en translation (32) du marteau supérieur (24S) interposés entre ladite coulisse (26) et ledit marteau supérieur (24S).

2. Dispositif multifonctions, pour l'implantation au défilé d'accessoires pour la vigne selon la revendication 2, **caractérisé en ce que** les moyens de manœuvre en translation (32) interposés entre la coulisse (26) et le marteau supérieur (24S) comprennent un jeu de biellettes (34) et un actionneur sous forme d'un vérin (36) avec une partie fixe, en l'occurrence le corps du vérin solidaire de la coulisse (26) et une partie mobile, en l'occurrence la tige du vérin, des biellettes d'action (34-1), agencées en paire, montées pivotantes par une de leurs extrémités de part et d'autre de la coulisse (26), dans des trous (34-2) ménagés dans une platine (38) solidaire de ladite coulisse (26), les autres extrémités des biellettes d'action (34-1) étant montées pivotantes sur la coulisse (26) par l'intermédiaire de biellettes de transfert (34-3), montées en paire, rapportées sur l'extrémité libre des biellettes d'action (34-1), les biellettes de transfert ayant chacune l'autre extrémité rapportée pivotante sur le marteau supérieur (24S), de façon à générer un mouvement de translation du marteau supérieur (24S) par rapport la coulisse (26) vers le haut ou vers le bas.

3. Dispositif multifonctions, pour l'implantation au défilé d'accessoires pour la vigne, selon l'une quelconque des revendications précédentes, **caractérisé en ce que** le mât de guidage (28) comporte un appendice de montage (30).

4. Dispositif multifonctions, pour l'implantation au défilé d'accessoires pour la vigne, selon l'une quelconque des revendications précédentes, **caractérisé en ce qu'**il comprend des moyens de correction (14) avec une platine (42) montée pivotante autour d'un axe de pivotement (44) par rapport au châssis (10), orienté transversalement par rapport au sens de déplacement F, et des moyens de manoeuvre en pivotement (43), interposés entre ladite platine (42) et ledit châssis (10) de façon à pouvoir faire basculer la platine (42) autour de l'axe de pivotement (44).

5. Dispositif multifonctions, pour l'implantation au défilé d'accessoires pour la vigne, selon la revendication 4, **caractérisé en ce que** la platine (42) porte un plateau (46), monté en translation par rapport à ladite platine (42), et des moyens de manoeuvre (48) dudit plateau en translation, suivant le sens de déplacement F.

6. Dispositif multifonctions, pour l'implantation au défilé d'accessoires pour la vigne, selon la revendication 5, **caractérisé en ce que** le plateau (46) porte un ascenseur (50) avec une ossature comportant quatre montants (52) et quatre traverses (52), et quatre manchons (54) coulissants sur les quatre montants (52) et un socle (56), solidaire desdits manchons (54) coulissants avec des moyens de manœuvre (58) dudit socle (56) interposés entre ledit socle (56) et les traverses (52) de façon à pouvoir monter et descendre ledit socle (56) par rapport à l'ossature.

7. Dispositif multifonctions, pour l'implantation au défilé d'accessoires pour la vigne, selon la revendication 6, **caractérisé en ce que** le socle (56) porte des moyens de compensation de l'avance (16) comprenant une paire de bras (60) montés pivotants par rapport au socle (56), chacun par une extrémité et montés pivotants par rapport à la coulisse (26) des moyens d'enfoncement (12), chacun par l'autre extrémité ainsi que des moyens de manœuvre (62) de compensation à l'avance interposés entre lesdits bras (60) et ledit socle (56) de façon à pouvoir faire pivoter lesdits bras.

8. Dispositif multifonctions, pour l'implantation au défilé d'accessoires pour la vigne, selon l'une quelconque des revendications 6 ou 7, **caractérisé en ce que** le socle (56) comporte un berceau (64) d'accueil à coulissement de l'appendice de montage (30) des moyens d'enfoncement (12) à double marteau.

9. Dispositif multifonctions, pour l'implantation au défilé d'accessoires pour la vigne, selon l'une quelconque des revendications 6 à 8, **caractérisé en ce que** le châssis (10) comporte deux bras l'un gauche (10-1G), l'autre droit (10-1D), portant chacun une roue (10-2G) et (10-2D) et un vérin gauche (10-3G) et un vérin droit (10-3D) interposé entre ledit châssis et chacun des bras correspondants, de façon à permettre de corriger le dévers.

10. Dispositif multifonctions, pour l'implantation au défilé d'accessoires pour la vigne, selon l'une quelconque des revendications précédentes, **caractérisé en ce qu'**il comprend des moyens de travail de la terre (20).

11. Dispositif multifonctions, pour l'implantation au défilé d'accessoires pour la vigne, selon la revendication 10, **caractérisé en ce qu'**il comprend un soc (68), mobile en hauteur de façon à pouvoir ouvrir un sillon et à implanter un pied de vigne en fond de sillon et des rasettes (70), mobiles en hauteur, pour fermer le sillon.

## Patentansprüche

1. Multifunktionsvorrichtung zum Einsetzen von Weinanbauzubehör im Durchlauf, insbesondere von Pfählen/Markierungen, umfassend ein auf Rädern (10-2G, 10-2D) montiertes Fahrgestell (10), das dazu bestimmt ist, an eine Zugeinrichtung in einer Bewegungsrichtung F angekoppelt zu werden,
**dadurch gekennzeichnet, dass** sie eine Rammeinrichtung (12) aufweist, die zwei Hämmer, einen oberen Hammer (24S) und einen unteren Hammer (241), umfasst, die beide auf einer Führungsschiene (26) montiert sind, die translatorisch an einem Führungsmast (28) montiert ist, und translatorische Betätigungsmittel (32) des oberen Hammers (24S), die zwischen der Führungsschiene (26) und dem oberen Hammer (24S) angeordnet sind.

2. Multifunktionsvorrichtung zum Einsetzen von Weinanbauzubehör im Durchlauf nach Anspruch 2, **dadurch gekennzeichnet, dass** die zwischen der Führungsschiene (26) und dem oberen Hammer (24S) angeordneten translatorischen Betätigungsmittel (32) einen Satz von Stangen (34) und einen Aktuator in Form eines Zylinders (36) mit einem festen Teil, nämlich dem mit der Führungsschiene (26) fest verbundenen Zylinderkörper, und einem beweglichen Teil, nämlich der Zylinderstange, umfassen, wobei die paarweise angeordneten Betätigungsstangen (34-1) schwenkbar um eines ihrer Enden beiderseits der Führungsschiene (26) in Löchern (34-2) montiert sind, die in einer mit der Führungsschiene (26) fest verbundenen Platte (38) ausgebildet sind, wobei die anderen Enden der Betätigungsstangen (34-1) auf der Führungsschiene (26) schwenkbar um paarweise montierte Übertragungsstangen (34-3) montiert sind, die am freien Ende der Betätigungsstangen (34-1) angebracht sind, wobei das jeweils andere Ende der Übertragungsstangen schwenkbar am oberen Hammer (24S) angebracht ist, um eine Translationsbewegung des oberen Hammers (24S) in Bezug auf die Führungsschiene (26) nach oben oder nach unten zu erzeugen.

3. Multifunktionsvorrichtung zum Einsetzen von Weinanbauzubehör im Durchlauf nach einem der vorstehenden Ansprüche,
**dadurch gekennzeichnet, dass** der Führungsmast (28) einen Montageansatz (30) aufweist.

4. Multifunktionsvorrichtung zum Einsetzen von Weinanbauzubehör im Durchlauf nach einem der vorstehenden Ansprüche,
**gekennzeichnet dadurch, dass** sie Korrekturmittel (14) mit einer Platte (42) umfasst, die schwenkbar um eine Schwenkachse (44) in Bezug auf das Fahrgestell (10) montiert ist, die quer zur Bewegungsrichtung F ausgerichtet ist, und Schwenkbetätigungsmittel (43), die zwischen der Platte (42) und dem Fahrgestell (10) angeordnet sind, damit die Platte (42) um die Schwenkachse (44) gekippt werden kann.

5. Multifunktionsvorrichtung zum Einsetzen von Weinanbauzubehör im Durchlauf nach Anspruch 4, **dadurch gekennzeichnet, dass** die Platte (42) eine Plattform (46) trägt, die translatorisch bezogen auf die Platte (42) montiert ist, und translatorische Betätigungsmittel (48) der Plattform je nach der Bewegungsrichtung F.

6. Multifunktionsvorrichtung zum Einsetzen von Weinanbauzubehör im Durchlauf nach Anspruch 5, **dadurch gekennzeichnet, dass** die Plattform (46) einen Aufzug (50) mit einem Gestell trägt, das vier Pfosten (52) und vier Querträger (52) aufweist, und vier Muffen (54), die auf den vier Pfosten (52) gleiten, und ein Unterteil (56), das mit den Muffen (54) verbunden ist, die mit den Betätigungsmitteln (58) des Unterteils (56) gleiten, die zwischen dem Unterteil (56) und den Querträgern (52) angeordnet sind, damit das Unterteil (56) in Bezug auf das Gestell angehoben und abgesenkt werden kann.

7. Multifunktionsvorrichtung zum Einsetzen von Weinanbauzubehör im Durchlauf nach Anspruch 6, **dadurch gekennzeichnet, dass** das Unterteil (56) Kompensationsmittel des Vorschubs (16) trägt, die ein Paar von Armen (60) umfassen, die schwenkbar zum Unterteil (56), jeweils um ein Ende, montiert sind und schwenkbar zur Führungsschiene (26) der Rammeinrichtung (12), jeweils um das andere Ende, montiert sind, sowie Betätigungsmittel (62) zur Kompensation des Vorschubs, die zwischen den Armen (60) und dem Unterteil (56) angeordnet sind, um die Arme schwenkbar zu machen.

8. Multifunktionsvorrichtung zum Einsetzen von Weinanbauzubehör im Durchlauf nach einem der Ansprüche 6 oder 7, **dadurch gekennzeichnet, dass** das Unterteil (56) eine Wiege (64) zum Aufnehmen des Gleitens des Montageansatzes (30) der Rammeinrichtung (12) mit Doppelhammer aufweist.

9. Multifunktionsvorrichtung zum Einsetzen von Weinanbauzubehör im Durchlauf nach einem der Ansprüche 6 bis 8, **dadurch gekennzeichnet, dass** das Fahrgestell (10) zwei Arme, einen linken (10-1G) und einen rechten (10-1D), aufweist, die jeweils ein Rad (10-2G) und (10-2D) sowie einen linken Zylinder (10-3G) und einen rechten Zylinder (10-3D) tragen, die zwischen dem Fahrgestell und jedem der entsprechenden Arme angeordnet sind, um eine Neigungskorrektur zu ermöglichen.

10. Multifunktionsvorrichtung zum Einsetzen von Weinanbauzubehör im Durchlauf nach einem der vorstehenden Ansprüche,
**dadurch gekennzeichnet, dass** sie Bodenbearbeitungsmittel (20) umfasst.

11. Multifunktionsvorrichtung zum Einsetzen von Weinanbauzubehör im Durchlauf nach Anspruch 10, **dadurch gekennzeichnet, dass** sie eine in der Höhe bewegliche Pflugschar (68) umfasst, um eine Furche öffnen und einen Weinstock am Boden der Furche einpflanzen zu können, und in der Höhe bewegliche Vorschäler (70), um die Furche zu schließen.

## Claims

1. Multi-purpose device for the running installation of vineyard accessories, in particular stakes/labels, comprising a frame (10) mounted on wheels (10-2G, 10-2D) and intended to be hitched to means for pulling in a travel direction F,
**characterized in that** the device has driving-in means (12) comprising two hammers, an upper hammer (24S) and a lower hammer (241), both mounted on a slide (26) which is translationally mounted on a guide mast (28), and means (32) for translationally maneuvering the upper hammer (24S) which are positioned between said slide (26) and said upper hammer (24S).

2. Multi-purpose device for the running installation of vineyard accessories according to claim 2, **characterized in that** the translational maneuvering means (32) positioned between the slide (26) and the upper hammer (24S) comprise a set of connecting rods (34) and an actuator, in the form of a cylinder (36) with a fixed part, in this case the body of the cylinder rigidly connected to the slide (26), and a movable part, in this case the rod of the cylinder, for actuating the action connecting rods (34-1) which are arranged in pairs and pivotably mounted on either side of the slide (26) via one of their ends, in holes (34-2) formed in a plate (38) rigidly connected to said slide (26), the other ends of the action connecting rods (34-1) being pivotably mounted on the slide (26) by means of transfer connecting rods (34-3) which are mounted in pairs and attached to the free end of the action connecting rods (34-1), the transfer connecting rods each having the other end pivotably attached to the upper hammer (24S), so as to generate a translational upward or downward movement of the upper hammer (24S) relative to the slide (26).

3. Multi-purpose device for the running installation of vineyard accessories according to either one of the preceding claims, **characterized in that** the guide mast (28) has a mounting appendage (30).

4. Multi-purpose device for the running installation of vineyard accessories according to any one of the preceding claims, **characterized in that** the device comprises correction means (14) having a plate (42) which is pivotably mounted relative to the frame (10) about a pivot shaft (44) which is oriented transversely relative to the travel direction F, and pivoting maneuvering means (43) which are positioned between said plate (42) and said frame (10) so as to be able to tilt the plate (42) about the pivot shaft (44).

5. Multi-purpose device for the running installation of vineyard accessories according to claim 4, **characterized in that** the plate (42) bears a tray (46) which is translationally mounted relative to said plate (42), and means (48) for translationally maneuvering said tray in the travel direction F.

6. Multi-purpose device for the running installation of vineyard accessories according to claim 5, **characterized in that** the tray (46) bears an elevator (50) with a framework having four uprights (52) and four cross-members (52), and four sliding sleeves (54) on the four uprights (52) and a base (56) which is rigidly connected to said sliding sleeves (54) with means (58) for maneuvering said base (56) which are positioned between said base (56) and the cross-members (52) so as to be able to raise and lower said base (56) relative to the framework.

7. Multi-purpose device for the running installation of vineyard accessories according to claim 6, **characterized in that** the base (56) bears advancement compensation means (16) comprising a pair of arms (60) each pivotably mounted, relative to the base (56), via one end and each pivotably mounted, relative to the slide (26) of the driving-in means (12), via the other end, as well as advancement compensation maneuvering means (62) which are positioned between said arms (60) and said base (56) so as to be able to pivot said arms.

8. Multi-purpose device for the running installation of vineyard accessories according to either one of claims 6 or 7, **characterized in that** the base (56) has a cradle (64) for slidingly receiving the mounting appendage (30) of the twin-hammer driving-in means (12).

9. Multi-purpose device for the running installation of vineyard accessories according to any one of claims 6 to 8, **characterized in that** the frame (10) has two arms, one left (10-1G), the other right (10-1D), each bearing a wheel (10-2G) and (10-2D), and a left cylinder (10-3G) and a right cylinder (10-3D) positioned between said frame and each of the corresponding arms, so as to allow correction of the tilt.

10. Multi-purpose device for the running installation of vineyard accessories according to any one of the preceding claims, **characterized in that** the device comprises means (20) for working the earth.

11. Multi-purpose device for the running installation of vineyard accessories according to claim 10, **characterized in that** the device comprises a plowshare (68) which is movable heightwise so as to be able to open a furrow and so as to plant a vine plant at the bottom of the furrow, and skimmers (70), which are movable heightwise, for closing the furrow.
